# EUROPEAN PATENT APPLICATION

(11) **EP 3 683 774 A1**
(43) Date of publication of application: **22.07.2020**
(21) Application number: 18855888.6
(22) Date of filing: 22.06.2018
(51) Int. Cl.: G06T 19/00, G06T 1/00, G06T 7/593

(54) **INFORMATION PROCESSING DEVICE, INFORMATION PROCESSING METHOD, AND PROGRAM**

(30) Priority: 13.09.2017 JP 2017175989
(71) Applicant: SONY CORPORATION, Minato-ku Tokyo 108-0075 (JP)
(72) Inventor: KONDO, Akane, Tokyo 108-0075 (JP); FUKAZAWA, Ryo, Tokyo 108-0075 (JP); NITTA, Kei, Tokyo 108-0075 (JP); NODA, Takuro, Tokyo 108-0075 (JP); SUGIHARA, Kenji, Tokyo 108-0075 (JP)
(74) Representative: MFG Patentanwälte Meyer-Wildhagen Meggle-Freund Gerhard PartG mbB
(86) International application number: PCT/JP2018/023842
(87) International publication number: WO 2019/053997

(57) **Abstract**

[Problem] An information processing apparatus, an information processing method, and a program are provided.

[Solution] An information processing apparatus includes a display control unit configured to display a first virtual object having a visual salience corresponding to color information of a real space, and having substantially a same shape as a real object existing in the real space, in the real space so as to be viewed at substantially a same position as the real object.

## Description

### Field

The present disclosure relates to an information processing apparatus, an information processing method, and a program.

### Background

In recent years, there has been widely used an augmented reality (AR) technology that augments a reality environment perceived by human, by superimposing additional information onto a real space, and the AR technology has been applied to information presentation. In the AR technology, additional information presented to the user is also referred to as an annotation, and can be visualized using virtual objects in various forms, such as text, icons, images, or 3D models.

For example, Patent Literature 1 discloses a technology of transparently displaying an annotation (virtual object) with being superimposed on an image in a real space that is being viewed by the user, using a so-called see-through display (transmissive display unit). In addition, Patent Literature 1 describes displaying a notification (e.g. shadow of annotation) indicating the existence of an annotation, in a case where a part or all of the annotation falls outside a visible range.

### Citation List

### Patent Literature

Patent Literature 1: WO 2014/162825 A

### Summary

### Technical Problem

Nevertheless, in the above-described AR technology, when a virtual object is displayed on a see-through display or the like, it sometimes becomes hard to see a real object existing in a real space. In this case, for example, it might become difficult for the user to feel as if a virtual object existed in a real space, or even though a real object existing in the real space is desired to attract attention, the user might feel hard to see the real object.

In view of the foregoing, the present disclosure proposes an information processing apparatus, an information processing method, and a program that can enhance the visibility of a real object. Solution to Problem

According to the present disclosure, an information processing apparatus is provided that includes: a display control unit configured to display a first virtual object having a visual salience corresponding to color information of a real space, and having substantially a same shape as a real object existing in the real space, in the real space so as to be viewed at substantially a same position as the real object.

Moreover, according to the present disclosure, an information processing method is provided that includes: by a processor, displaying a first virtual object having a visual salience corresponding to color information of a real space, and having substantially a same shape as a real object existing in the real space, in the real space so as to be viewed at substantially a same position as the real object.

Moreover, according to the present disclosure, a program is provided that causes a computer to implement a function of: displaying a first virtual object having a visual salience corresponding to color information of a real space, and having substantially a same shape as a real object existing in the real space, in the real space so as to be viewed at substantially a same position as the real object.

### Advantageous Effects of Invention

As described above, according to the present disclosure, it is possible to enhance the visibility of a real object.

Note that the effects described above are not necessarily limitative. With or in the place of the above effects, there may be achieved any one of the effects described in this specification or other effects that may be grasped from this specification.

### Brief Description of Drawings

FIG. 1 is a diagram describing an overview of an information processing apparatus 1 according to the present embodiment.
FIG. 2 is an explanatory diagram for describing display control for displaying a content object with being appropriately shielded.
FIG. 3 is a block diagram illustrating a configuration example of the information processing apparatus 1 according to the embodiment.
FIG. 4 is a flowchart illustrating an operation example of the information processing apparatus 1 according to the embodiment.
FIG. 5 is an explanatory diagram for describing an example in which a masking object has luminance corresponding to luminance of a real object.
FIG. 6 is an explanatory diagram for describing an example in which a masking object has texture corresponding to texture of a real object.
FIG. 7 is an explanatory diagram for describing an example in which a masking object has luminance corresponding to information regarding brightness of a real space.
FIG. 8 is an explanatory diagram for describing an example in which a content object has a color corresponding to information regarding a color temperature of a real space.
FIG. 9 is an explanatory diagram describing an example of displaying a shadow of a masking object and a shadow of a content object in a real space.
FIG. 10 is an explanatory diagram describing an example of a case of displaying a shadow of a masking object and a shadow of a content object in a real space.
FIG. 11 is an explanatory diagram for describing an example of controlling a visual salience of a masking object on the basis of positional relationship between a real object and a content object.
FIG. 12 is an explanatory diagram for describing an example of controlling a visual salience of a masking object on the basis of whether the entire masking object is displayable.
FIG. 13 is an explanatory diagram for describing an example in which a focus object has texture corresponding to texture of a real object.
FIG. 14 is an explanatory diagram for describing an example of controlling a visual salience of a masking object on the basis of visual line information.
FIG. 15 is an explanatory diagram for describing an example of controlling a visual salience of a masking object on the basis of visual line information.
FIG. 16 is a block diagram illustrating an example of a hardware configuration.

### Description of Embodiments

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description will be given in the following order.
<<1. Overview>>
<<2. Configuration>>
<<3. Operation>>
<<4. Example of Display Control>>
   <4-1. Example of Displaying Masking Object and Content Object>
   <4-2. Example of Displaying Focus Object>
<<5. Hardware Configuration Example>>
<<6. Conclusion>>

### <<1. Overview>>

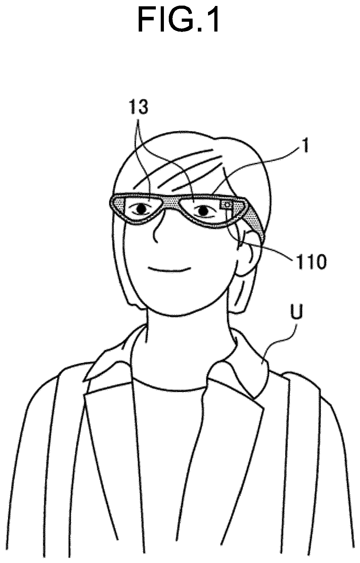

First of all, an overview of an information processing apparatus according to a first embodiment of the present disclosure will be described. FIG. 1 is a diagram describing an overview of an information processing apparatus 1 according to the present embodiment. As illustrated in FIG. 1, the information processing apparatus 1 according to the present embodiment is implemented by a glasses-type head mounted display (HMD) attached to a head portion of a user U, for example. A display unit 13 corresponding to eyewear lens portions positioning in front of eyes of the user U when the user U wears the information processing apparatus 1 may be a so-called optical see-through display having optical transmissivity. The information processing apparatus 1 can present a virtual object within a vision range of the user U by displaying the virtual object on the display unit 13. In addition, an HMD being an example of the information processing apparatus 1 is not limited to a display that presents an image to both eyes, and may be a display that presents an image only to one eye. For example, an HMD may be a one-eyed display including the display unit 13 that presents an image to one eye.

In addition, the information processing apparatus 1 is provided with an outward camera 110 that captures an image in a visual line direction of the user U, that is to say, a vision range of the user when the user wears the information processing apparatus 1. Furthermore, the information processing apparatus 1 may be provided with an inward camera that captures an image of an eye of the user U when the user U wears the information processing apparatus 1, and various sensors such as a microphone, which are not illustrated in FIG. 1. A plurality of outward cameras 110 and a plurality of inward cameras may be provided.

Note that the shape of the information processing apparatus 1 is not limited to an example illustrated in FIG. 1. For example, the information processing apparatus 1 may be a headband type HMD (attached by a band wrapping around the whole circumference of a head portion, or a band passing through not only the side of the head but also the top of the head is sometimes provided), or a helmet-type HMD (a visor portion of the helmet corresponds to the display unit 13).

Here, for example, in a case where the display unit 13 has optical transmissivity, the user U can view information displayed on the display unit 13 while viewing a real space through the display unit 13. Thus, a virtual object displayed on the display unit 13 can be said to be displayed in the real space.

Furthermore, control that causes the user U to feel as if a virtual object existed in the real space can be performed. For example, the arrangement, the shape, or the like of a virtual object can be controlled on the basis of information regarding the real space that is obtained by image capturing of the outward camera 110, such as information regarding the position or the shape of a real object existing in the real space, for example.

A various types of virtual objects can be displayed on the display unit 13. For example, a virtual object may be a virtual object (hereinafter, will be sometimes referred to as a content object) indicating various types of content dependent on an application provided by the information processing apparatus 1. Alternatively, a virtual object may be a virtual object (hereinafter, will be sometimes referred to as a focus object) for highlighting a real object (hereinafter, will be sometimes referred to as a focus target) desired to attract attention of the user U, among real objects existing in the real space.

Note that various types of focus targets are used in accordance with applications provided by the information processing apparatus 1, and a focus target may be a real object indicating information required by the user in the real space, for example. Alternatively, in a case where an application that can perform a manipulation using a real object is provided, a focus target may be a real object that can be used for the manipulation.

Meanwhile, in a case where a virtual object is displayed on the display unit 13, the user U sometimes feels hard to see a real object. For example, by the display unit 13 displaying a virtual object more brightly (with higher luminance) than a real object, in some cases, the real object is felt relatively dark and it becomes hard to see the real object. In addition, if a focus object is displayed so as to be overlapped with a focus target for highlighting the focus target, in some cases, it becomes rather hard to see the focus target. Hereinafter, specific examples of these two cases will be described.

First of all, the description will be given of a case where, by the display unit 13 displaying a virtual object more brightly than a real object, the real object is felt relatively dark and it becomes hard to see the real object. When the display unit 13 having optical transmissivity displays a virtual object, if the virtual object is displayed darkly (with low luminance), it becomes hard to see the virtual object due to an overlap with the real space existing anteriorly to the display unit 13. Thus, for making the virtual object clearly visible, it is desirable to display the virtual object brightly (with high luminance).

Nevertheless, in a case where a virtual object is displayed brightly so as to make the virtual object clearly visible, the user U sometimes feels that light for the display unit 13 displaying the virtual object is more intense than light in the real space. In addition, as compared with the virtual object, the real object is felt relatively dark and it becomes hard to see the real object in some cases. In addition, a boundary between the virtual object and the real space sometimes stands out due to contrast between the virtual object and the real space.

Furthermore, if it becomes hard to see a real object or a boundary between a virtual object and the real space stands out, the user might become less likely to feel as if the virtual object existed in the real space. Particularly in a case where display control that is based on positional relationship between a virtual object and a real object is performed for causing the user to feel as if the virtual object existed in the real space, it is hard to see the real object and influence of an even is large.

Here, the display control that is based on positional relationship between a virtual object and a real object will be described. For causing the user U to feel as if a virtual object existed in the real space, for example, it is desirable to display a real object and a virtual object in such a manner that a feeling of strangeness is not felt at a boundary between the real object existing in the real space and the virtual object. Thus, for example, on the basis of information regarding a position and a shape of a real object, display control can be performed in the following manner for appropriately representing positional relationship between the real object and a virtual object. More specifically, the virtual object can be displayed in such a manner that a portion existing on the rear side of the real object when viewed from the user U is shielded. Note that because such display control is effective in the case of displaying the above-described content object, for example, the following description will be given using an example case where display control related to the content object is applied. Nevertheless, the display control can be similarly applied in the case of displaying another virtual object, and the technology to be described below using a content object as an example can also be similarly applied to another virtual object.

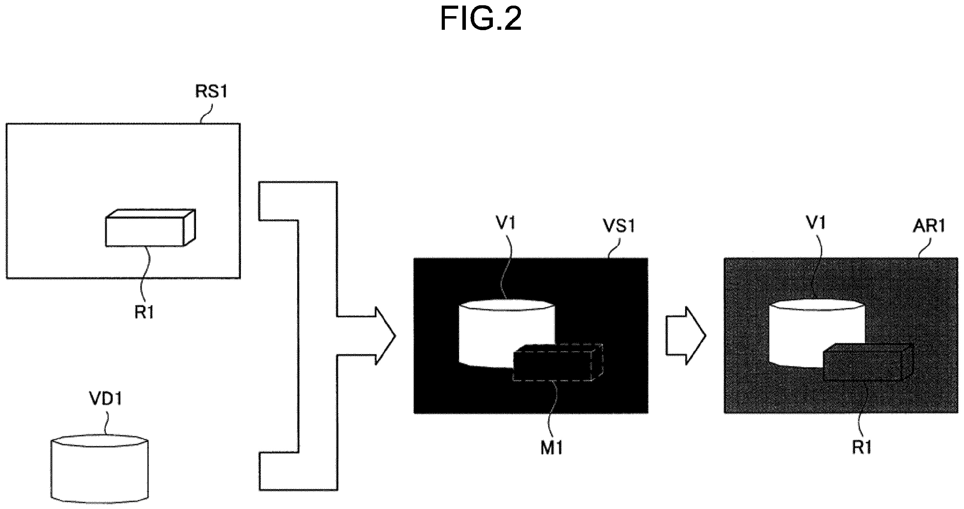

An example of display control for displaying a content object with being appropriately shielded on the basis of positional relationship between a real object and the content object will be described with reference to FIG. 2. FIG. 2 is an explanatory diagram for describing display control for displaying a content object with being appropriately shielded.

In the example illustrated in FIG. 2, a real object R1 exists in a real space. A real space image RS1 illustrated in FIG. 2 is a captured image of a real space obtained by capturing an image of the real space by the outward camera 110 illustrated in FIG. 1, for example. In addition, in the example illustrated in FIG. 2, a content object V1 is displayed on the basis of content data VD1 that has been prestored or acquired from an external device.

Here, display control is performed in the following manner for appropriately representing positional relationship between the real object R1 and the content object V1. More specifically, the content object V1 is displayed in such a manner that a portion existing on the rear side of the real object R1 when viewed from the user U is shielded.

First of all, a virtual object (hereinafter, will be referred to as a masking object) M1 for performing shielding (masking) in accordance with the shape and the position of the real object R1 is arranged in a virtual space together with the content object V1. Then, a virtual space image VS1 obtained by performing rendering at a position in the virtual space that corresponds to a viewpoint position of the user U is displayed on the display unit 13. Note that the position and the shape of the content object V1 may be controlled on the basis of information regarding the real space, or may be preset.

Here, in a case where the content object V1 is shielded by the masking object M1, it is desirable to perform display control in such a manner that the real object R1 is visible in the shielded region. By the display control, it becomes possible to cause the user U to feel as if the content object V1 existed in the real space. In this example, because the real object R1 seems to shield the content object V1, the user U feels as if the content object V1 existed on the rear side of the real object R1 in the real space.

For causing the above-described effect, the masking object M1 has black color as illustrated in FIG. 2, for example. Note that, in the present disclosure, the description will be given using an example case where the display unit 13 has a specification of performing display in such a manner that a portion corresponding to a black color region included in the image lets light through. Nevertheless, the specification can vary depending on a display device. For example, some display devices display a region with another color indicating transparency so as to let light through, or display a transparent region so as to let light through on the basis of information indicating the transparent region. In this case, in accordance with the specification of the display device, the other color indicating transparency or the information indicating the transparent region may be used in place of the black color.

In addition, for causing the above-described effect, it is desirable that the masking object M1 has the same shape as the real object R1, and is arranged at a position in the virtual space that corresponds to the position of the real object R1. In other words, in a case where the virtual space image VS1 is displayed on the display unit 13, it is desirable that the masking object M1 is displayed so as to be overlapped with the real object R1 at exactly the same position.

Nevertheless, the shape and the position of the masking object M1 need not be strictly the same as the shape and the position of the real object R1, and may be substantially the same. For example, the shape of the masking object M1 may be a shape closely analogous to the shape of the real object R1. Also in this case, the shape of the masking object M1 is interpreted as substantially the same as the shape of the real object R1 in this specification.

FIG. 2 illustrates a vision range AR1 of the user U that is obtained through the display unit 13 when the virtual space image VS1 is displayed on the display unit 13. As described above, in a region in the vision range AR1 that corresponds to a black color region in the virtual space image VS1, the real space is assumed to be viewed. In other words, in a case where the masking object M1 has black color as described above, among regions in the display unit 13, a region in which the masking object M1 is displayed lets light through, and the user is assumed to visually recognize that the real object R1 shields the content object V1.

Here, as described above, if the content object V1 is displayed with high luminance for making the content object V1 clearly visible, the user U feels the real space including the real object R1, relatively dark. As a result, as in the vision range AR1 illustrated in FIG. 2, it becomes hard for the user U to see the real object R1.

As described above, because the content object V1 seems to be shielded by the real object R1, it becomes possible for the user U to feel as if the content object V1 existed in the real space. Nevertheless, if it becomes hard to see the real object R1, the content object V1 does not seem to be shielded by the real object R1, and the user might become less likely to feel as if the content object V1 existed in the real space.

Subsequently, the description will be given of a case where, if a focus object is displayed so as to be overlapped with a focus target for highlighting the focus target, it becomes rather hard to see the focus target.

As a method for focusing attention on a focus target, for example, it is considered to perform display control of changing the color of the focus target. In such display control, a focus object having substantially the same shape as the focus target is displayed at substantially the same position as the focus target. That is to say, the focus object is displayed so as to be overlapped with the focus target. For example, by displaying, on the display unit 13, a focus object having a predetermined color so as to be overlapped with the focus target, light in the real space and light emitted by the display unit 13 are added and the color of the focus target seems to change.

Meanwhile, depending on the colors of a focus target and a focus object, by displaying the focus object so as to be overlapped with the focus target, it might become rather hard to see the focus target. For example, if a focus object with color largely different from the color of a focus target is displayed, the focus target viewed through the display unit 13 seems to have color with low visibility, and it might become hard to see the focus target. In addition, if the focus target seems to have color totally different from the color of the focus target that is normally recognized by human, the focus target is felt unnatural and it might become hard to see the focus target.

Thus, from a viewpoint of the above-described circumstances, an embodiment of the present disclosure has been eventually devised. Similarly to the above-described example, the information processing apparatus 1 according to the present embodiment displays a first virtual object (masking object or focus object in the above-described example) having substantially the same shape as a real object, in a real space so as to be viewed at substantially the same position as the real object. At this time, the information processing apparatus 1 according to the present embodiment can enhance visibility of the real object by performing display control in such a manner that the first virtual object has a visual salience corresponding to color information of the real space. Hereinafter, a configuration of the information processing apparatus 1 according to the present embodiment that has such an effect will be described in detail.

### <<2. Configuration>>

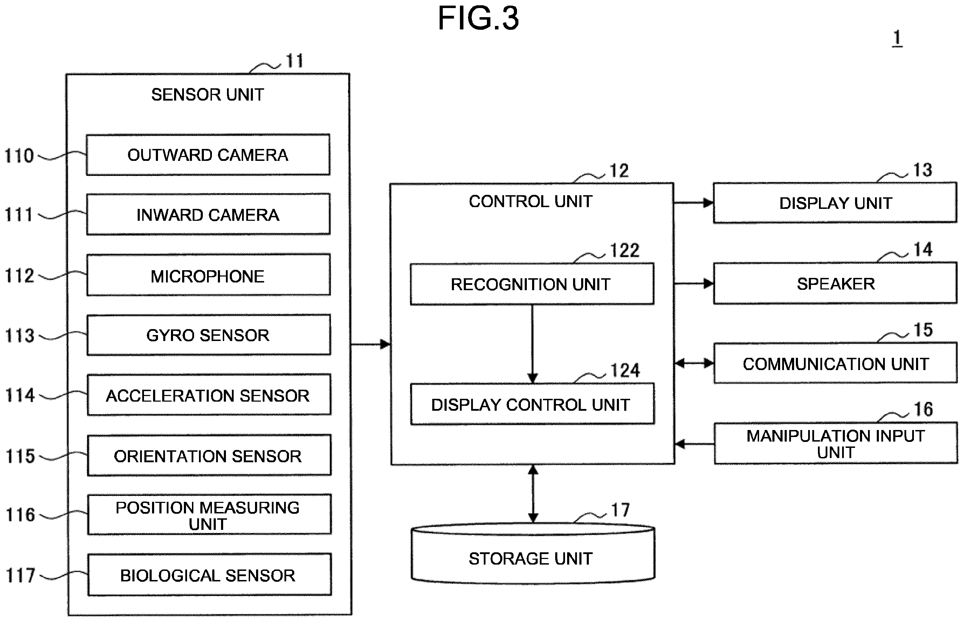

FIG. 3 is a block diagram illustrating a configuration example of the information processing apparatus 1 according to the present embodiment. As illustrated in FIG. 3, the information processing apparatus 1 includes a sensor unit 11, a control unit 12, the display unit 13, a speaker 14, a communication unit 15, a manipulation input unit 16, and a storage unit 17.

### (Sensor Unit 11)

The sensor unit 11 has a function of acquiring (sensing) various types of information regarding the user or a surrounding environment. For example, the sensor unit 11 includes the outward camera 110, an inward camera 111, a microphone 112, a gyro sensor 113, an acceleration sensor 114, an orientation sensor 115, a position measuring unit 116, and a biological sensor 117. Note that specific examples of the sensor unit 11 listed here are examples, and the present embodiment are not limited to these. In addition, a plurality of sensors may be provided as each type of the sensors.

The outward camera 110 and the inward camera 111 each include a lens system including an imaging lens, a diaphragm, a zoom lens, a focus lens, and the like, a drive system that causes the lens system to perform a focusing operation or a zoom operation, a solid-state image sensor array that generates an imaging signal by photoelectrically converting imaging light obtained by the lens system, and the like. The solid-state image sensor array may be implemented by a charge coupled device (CCD) sensor array or a complementary metal oxide semiconductor (CMOS) sensor array, for example.

Note that, in the present embodiment, it is desirable that a field angle and orientation of the outward camera 110 are set so as to capture an image of a region corresponding a vision range of the user in the real space. In addition, a plurality of outward cameras 110 may be provided. Furthermore, the outward camera 110 may include a depth camera that can acquire a depth map by sensing.

The microphone 112 collects voice of the user and ambient environmental sound, and outputs the collected voice and sound to the control unit 12 as voice data.

The gyro sensor 113 is implemented by a triaxial gyro sensor, for example, and detects angular speed (rotational speed).

The acceleration sensor 114 is implemented by a triaxial gyro sensor, for example, and detects acceleration in movement.

The orientation sensor 115 is implemented by a triaxial geomagnetic sensor (compass), for example, and detects an absolute direction (azimuth direction).

The position measuring unit 116 has a function of detecting a current position of the information processing apparatus 1 on the basis of a signal acquired from the outside. Specifically, for example, the position measuring unit 116 is implemented by a global positioning system (GPS) positioning unit, detects a position at which the information processing apparatus 1 exists, by receiving radio waves from a GPS satellite, and outputs the detected position information to the control unit 12. In addition, the position measuring unit 116 may be a sensor that detects a position by Wi-Fi (registered trademark), Bluetooth (registered trademark), transmission and reception with a mobile phone, a personal handyphone system (PHS), a smartphone, or the like, near-field communication, or the like, for example, aside from the GPS.

The biological sensor 117 detects biological information of the user. Specifically, for example, the biological sensor 117 can detect heartbeat, body temperature, perspiration, blood pressure, pulsebeat, aspiration, palpebration, an eyeball movement, a gaze time, a size of a pupil diameter, blood pressure, brain waves, body motion, a bodily position, cutaneous temperature, electrical skin resistance, micro vibration (MV), muscle potential, blood oxygen saturation level (SPO2)), or the like.

### (Control Unit 12)

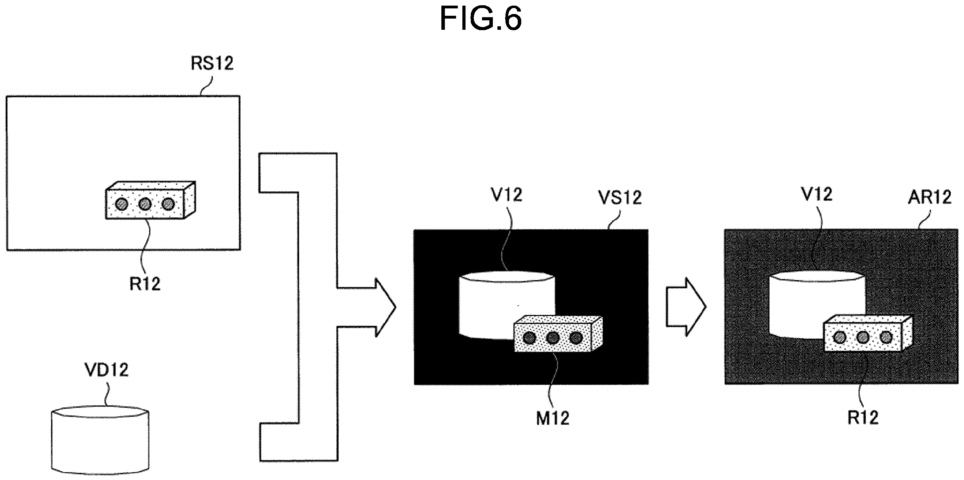

The control unit 12 functions as an arithmetic processing unit and a control device, and controls the overall operations in the information processing apparatus 1 in accordance with various programs. In addition, as illustrated in FIG. 6, the control unit 12 according to the present embodiment functions as a recognition unit 122 and a display control unit 124.

The recognition unit 122 has a function of performing recognition (including detection) of information regarding the user or information regarding a real space around the user, on the basis of various types of sensor information (sensing result) sensed by the sensor unit 11.

For example, on the basis of a captured image of the real space that has been obtained by image capturing performed by the outward camera 110, the recognition unit 122 may three-dimensionally recognize the real space around the user and further recognize a real object existing in the real space.

In the three-dimensional recognition of the real space that is performed by the recognition unit 122, in a case where the outward camera 110 includes a plurality of cameras, for example, a depth map obtained by performing stereo matching on a plurality of captured images obtained by the plurality of cameras may be used. In addition, the three-dimensional recognition of the real space may be performed by the recognition unit 122 by associating feature points detected from captured images between frames on the basis of time-series captured images. In addition, in a case where the outward camera 110 includes a depth camera, the three-dimensional recognition of the real space may be performed on the basis of a distance image obtained by sensing of the depth camera.

In addition, the recognition unit 122 may recognize the shape of a real object. The shape of a real object that is recognized by the recognition unit 122 may be a three-dimensional shape in the real space or may be a two-dimensional shape in a captured image. A three-dimensional shape of a real object in the real space may be recognized by separating real objects on the basis of a three-dimensional recognition result of the real space, for example. In addition, a two-dimensional shape of a real object in a captured image may be recognized using a known region segmentation technology, for example.

In addition, the recognition unit 122 may recognize an AR marker being a real object used for displaying a virtual object in the AR technology, and the shape of the AR marker. For example, on the basis of information regarding an AR marker stored in the storage unit 17, the recognition unit 122 can recognize an AR marker and the shape of the AR marker from a captured image obtained by image capturing performed by the outward camera 110. Because a known technology can be used for the recognition of an AR marker, the detailed description is omitted here.

In addition, on the basis of a captured image of the real space that has been obtained by image capturing performed by the outward camera 110, the recognition unit 122 may recognize a light source in the real space and acquire light source information regarding the light source. The light source information may include information regarding brightness or color temperature of the real space, for example.

In addition, the recognition unit 122 may recognize a visual line of the user as information regarding the user, and acquire visual line information regarding the visual line of the user. For example, the recognition unit 122 can recognize a visual line of the user by analyzing an image of an eye of the user that has been obtained by image capturing performed by the inward camera 111. The visual line information may include information regarding a gaze point of the user, for example. For example, in a case where a visual line of the user stays in a fixed range for a predetermined time or more, the recognition unit 122 may detect a point existing on the visual line of the user as a gaze point. Note that the information regarding a gaze point of the user may be information regarding a three-dimensional position in the real space, or may be information regarding a two-dimensional position in a captured image of in the real space that is obtained by image capturing performed by the outward camera 110. In addition, a method of detecting a gaze point of the user by the recognition unit 122 is not limited to the example, and the detection may be performed using known various methods.

The display control unit 124 controls display performed by the display unit 13 having optical transmissivity, and displays a virtual object in the real space. Various virtual objects are displayed by the display control unit 124 in the real space, and the display control unit 124 may display a content object, a masking object, and a focus object, which have been described above, and the like, for example. In addition, as described above, the display control unit 124 may display a virtual object in the real space by arranging the virtual object in a virtual space and displaying, on the display unit 13, a virtual space image obtained by performing rendering at a position in the virtual space that corresponds to a viewpoint position of the user.

As described above, the display control unit 124 can display various content objects (an example of a second virtual object to be described later) dependent on an application provided by the information processing apparatus 1, for example. The display control unit 124 may identify a position of a content object in the real space on the basis of the setting of the application and information regarding the real space recognized by the recognition unit 122, for example. The display control unit 124 displays a content object in the real space so as to be viewed at a position of the content object in the real space.

In addition, as described above, for causing the user to feel as if a virtual object (for example, content object) existed in the real space, the display control unit 124 performs display control in such a manner that positional relationship between a real object and the virtual object is appropriately represented. Thus, the display control unit 124 displays a masking object (an example of a first virtual object to be described later) having substantially the same shape as a real object, in the real space so as to be viewed at substantially the same position as the real object. Because the display control has already been described with reference to FIG. 2, the detailed description is omitted here. Nevertheless, the masking object displayed by the display control unit 124 according to the present embodiment differs from the masking object M1 described with reference to FIG. 2 in that the masking object has a visual salience corresponding to color information of the real space.

In addition, as described above, the display control unit 124 displays a focus object (an example of a first virtual object to be described later) for highlighting a focus target desired to attract attention of the user, in the real space. As described above, the display control unit 124 displays a focus object having substantially the same shape as the focus target, so as to be viewed at substantially the same position as the focus target, in the real space. Nevertheless, the focus object displayed by the display control unit 124 according to the present embodiment differs from the above-described focus object in that the focus object has a visual salience corresponding to color information of the real space.

In this manner, the masking object and the focus object that are displayed by the display control unit 124 have similar features at least partially. Hereinafter, the masking object and the focus object will be sometimes collectively referred to as a first virtual object in a case where there is no need to make a distinction between the masking object and the focus object.

The display control unit 124 may acquire color information of the real space, from a captured image of the real space that has been obtained by image capturing performed by the outward camera 110. For example, the color information of the real space may include light source information acquired by the recognition unit 122 performing recognition related to a light source on the basis of a captured image.

In addition, the color information of the real space may include color information regarding a real object, for example. The color information regarding a real object may include luminance information regarding luminance of the real object, hue information regarding hue, saturation information regarding saturation, texture information regarding texture, and the like, for example. In addition, luminance information, hue information, and saturation information of the real object each may be statistically-processed information, and each may be information regarding average luminance, average hue, or average saturation of the real object, for example. The color information regarding a real object can be acquired from a captured image.

The visual salience of the first virtual object may include luminance corresponding to luminance of the real object, for example. In other words, the display control unit 124 may display the first virtual object so as to have luminance corresponding to luminance of the real object, on the basis of luminance information regarding luminance of the real object. With this configuration, because a first virtual object having luminance corresponding to luminance of a real object is displayed to be superimposed on the real object when viewed from the user, the visibility of the real object is enhanced.

Here, in a case where the display control unit 124 displays a second virtual object different from the first virtual object in the real space, luminance of the first virtual object is desirably lower than luminance of the second virtual object for blending each virtual object with the real space. Thus, the display control unit 124 may display the first virtual object and the second virtual object in such a manner that luminance of the first virtual object becomes lower than luminance of the second virtual object.

Note that the second virtual object may be the above-described content object, for example. In other words, as described above, the display control unit 124 displays a masking object (an example of first virtual object) and a content object (an example of second virtual object) on the basis of positional relationship between a real object and the content object.

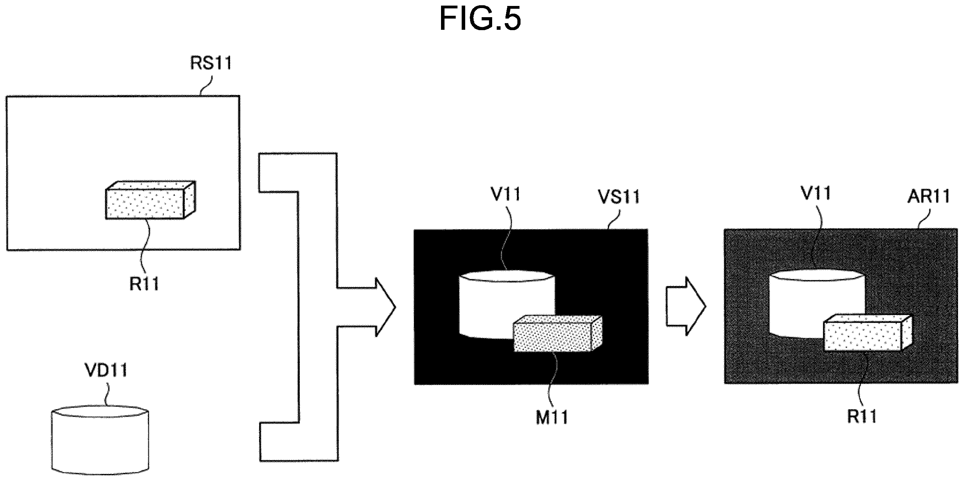

Note that, with reference to FIG. 5, the description will be specifically given later of an example in which the display control unit 124 displays a masking object as the above-described first virtual object and displays a content object as the second virtual object.

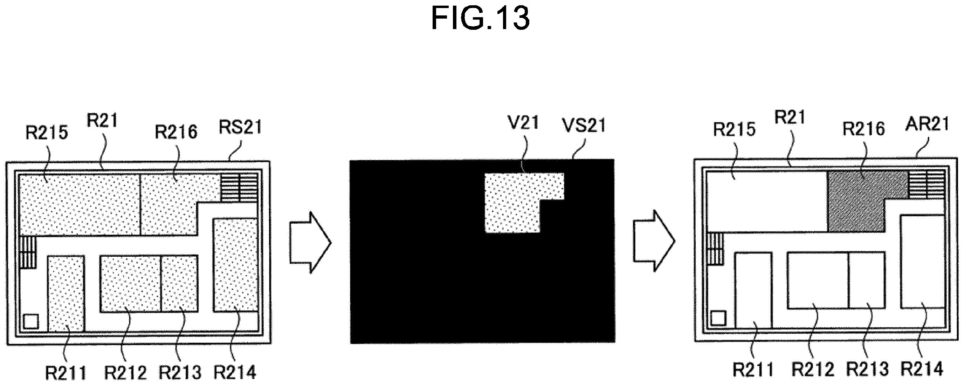

In addition, the visual salience of the first virtual object is not limited to the above-described example. For example, the visual salience of the first virtual object may include texture corresponding to texture of a real object. In other words, the display control unit 124 may display the first virtual object in such a manner that the first virtual object has texture corresponding to texture of a real object, on the basis of texture information of the real object. Note that an example in which the display control unit 124 displays a masking object as the first virtual object will be specifically described later with reference to FIG. 6. In addition, an example in which the display control unit 124 displays a focus object as the first virtual object as the first virtual object will be specifically described later with reference to FIG. 13.

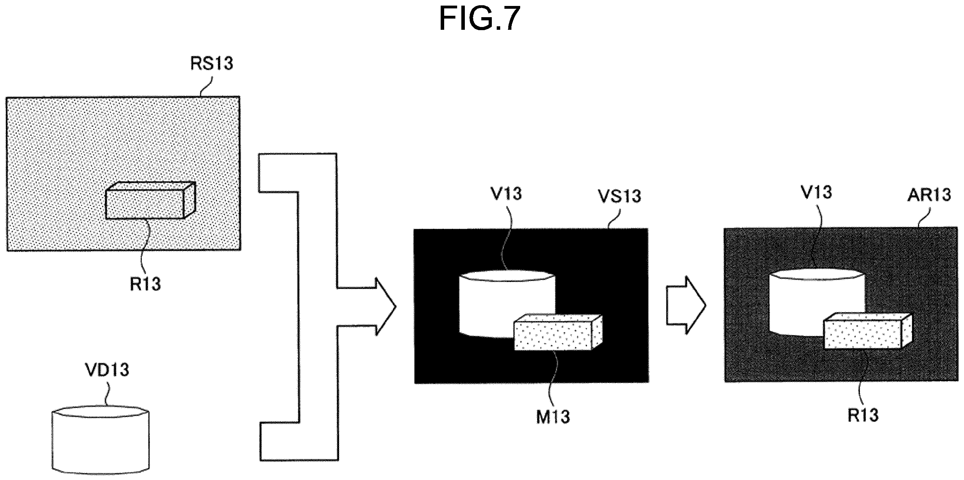

In addition, the visual salience of the first virtual object may include luminance corresponding to light source information. For example, the display control unit 124 may display the first virtual object in such a manner that the first virtual object has luminance corresponding to brightness of the real space, on the basis of light source information. Specifically, in a case where the real space is darker, the display control unit 124 may display the first virtual object in such a manner that the first virtual object has higher luminance. Note that an example in which the display control unit 124 displays a masking object as the first virtual object will be specifically described later with reference to FIG. 7.

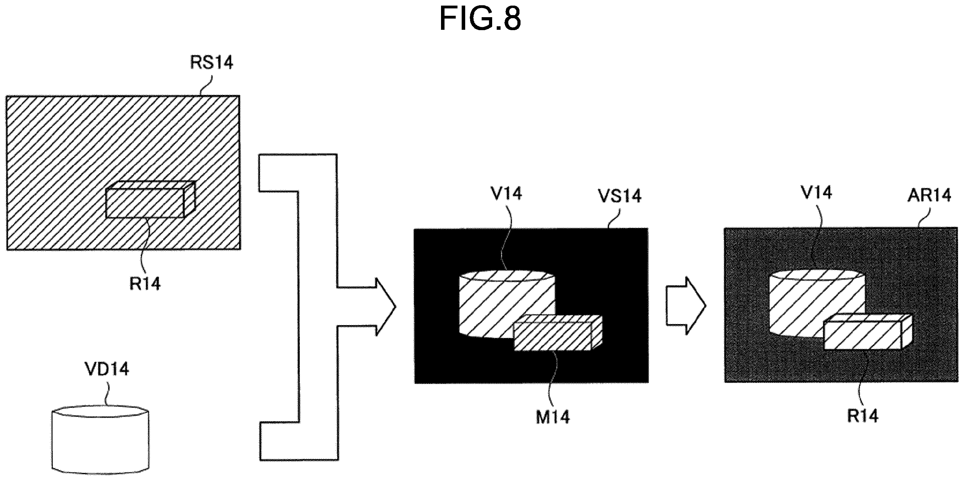

Note that the use of light source information by the display control unit 124 is not limited to the example. The display control unit 124 may display the second virtual object so as to have color corresponding to light source information. For example, the display control unit 124 may change the color of a content object (an example of second virtual object) that has been originally set by an application, in accordance with information regarding color temperature that is included in light source information. Note that an example in which the display control unit 124 displays a content object as the second virtual object will be specifically described later with reference to FIG. 8.

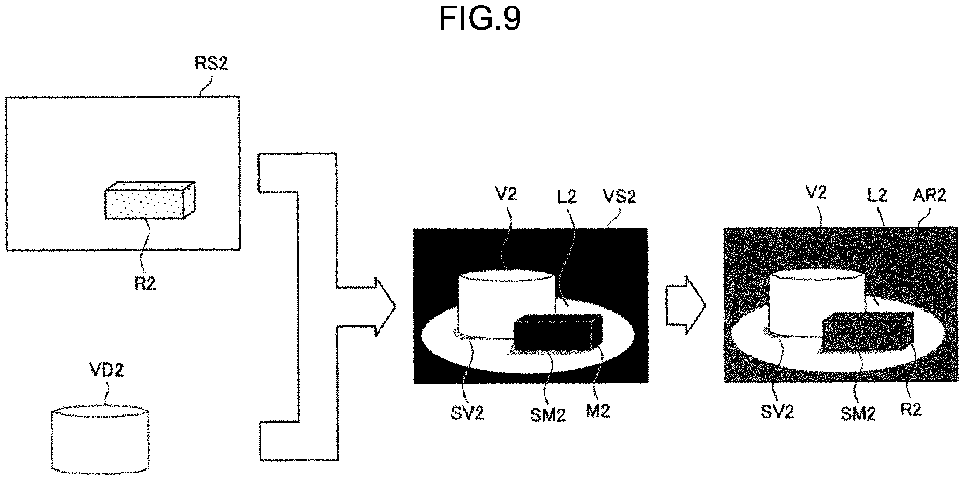

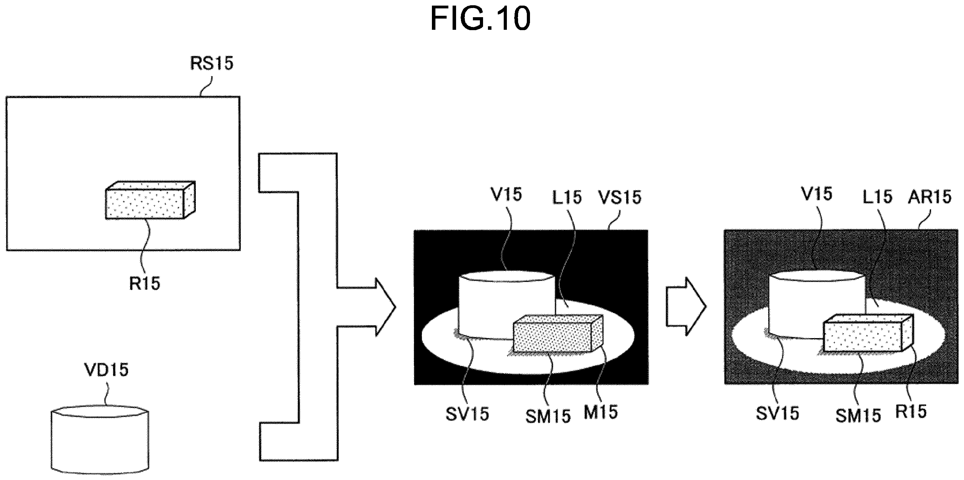

In addition, the display control unit 124 may display a shadow of the first virtual object and a shadow of the second virtual object in the real space. The shadow may be a shadow generated (rendered) on the basis of a virtual light source set in a virtual space. Note that the display control unit 124 may set a virtual light source on the basis of light source information of the real space, or may set a virtual light source independently of light source information of the real space. The example will be specifically described later with reference to FIGS. 9 and 10.

Heretofore, the first virtual object and the second virtual object displayed by the display control unit 124 have been described. The display control unit 124 displays the first virtual object so as to have any of the above-described visual saliences or a combination of a plurality of visual saliences.

The display control unit 124 may dynamically control a visual salience of the first virtual object among the above-described visual saliences. Hereinafter, several examples of control of a visual salience of the first virtual object will be described.

The display control unit 124 may control a visual salience of a masking object on the basis of positional relationship between a real object and a content object.

The display control unit 124 can determine whether a masking object shields at least part of a content object, on the basis of positional relationship between a real object and the content object. Then, in a case where the display control unit 124 displays a masking object and a content object in such a manner that the masking object shields at least part of the content object, the display control unit 124 may perform control in such a manner that a visual salience varies for each region in the masking object.

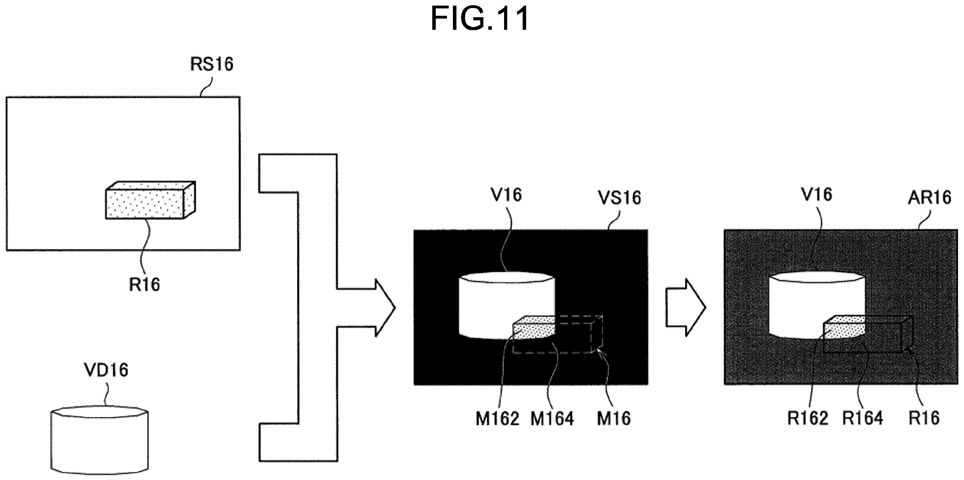

For example, the display control unit 124 may control a visual salience of a masking object in such a manner that a first region of the masking object that is shielded by a content object has a first visual salience, and a second region of the masking object that excludes the first region has a second visual salience different from the first visual salience. Note that the example will be specifically described later with reference to FIG. 11.

In addition, the display control unit 124 may control a visual salience of a masking object depending on whether the masking object shields at least part of a content object. For example, the display control unit 124 may perform control in such a manner that a visual salience of a masking object varies between a case where the masking object shields at least part of a content object, and a case where the masking object does not shield the content object. For example, in a case where a number of real objects are recognized by the recognition unit 122, if the visibility of all the real objects is enhanced, the visibility of a content object might decrease relatively. In this case, for example, the display control unit 124 controls a visual salience of a masking object that does not shield a content object, in such a manner that the visibility of a real object related to the masking object does not change or is not enhanced so much. Then, the display control unit 124 controls a visual salience in such a manner that the visibility of a real object related to a masking object that shields a content object is enhanced more. With this configuration, it becomes possible to cause the user to feel as if a content object existed in the real space, without decreasing the visibility of the content object.

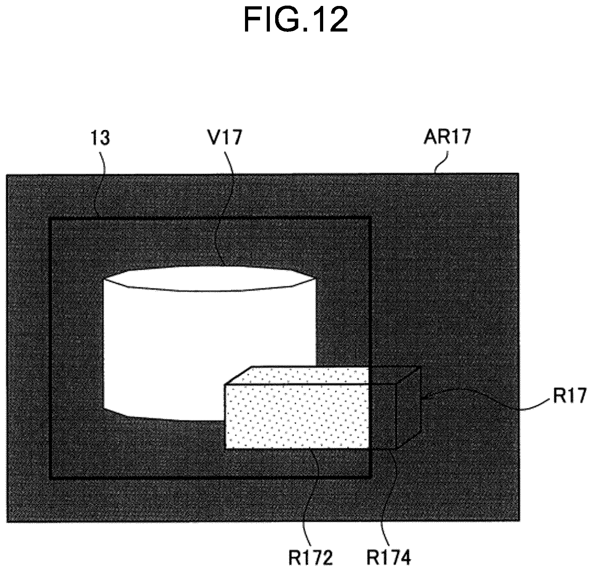

In addition, the display control unit 124 may control the visual salience of the first virtual object on the basis of whether the entire first virtual object can be displayed in such a manner that the first virtual object has substantially the same shape as a real object, and is viewed at substantially the same position as the real object. The example will be specifically described later with reference to FIG. 12.

In addition, the display control unit 124 may control a visual salience of a first virtual object on the basis of visual line information. For example, the display control unit 124 may identify a gaze region of the user in the real space on the basis of information regarding a gaze point that is included in visual line information, and control a visual salience of a first virtual object on the basis of the gaze region.

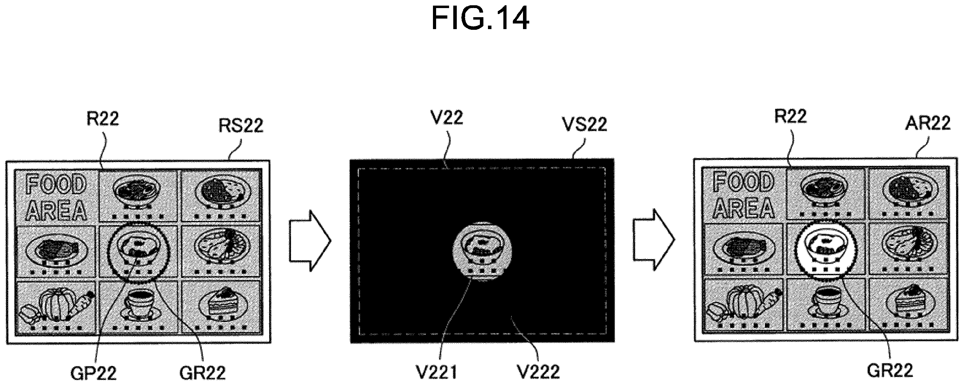

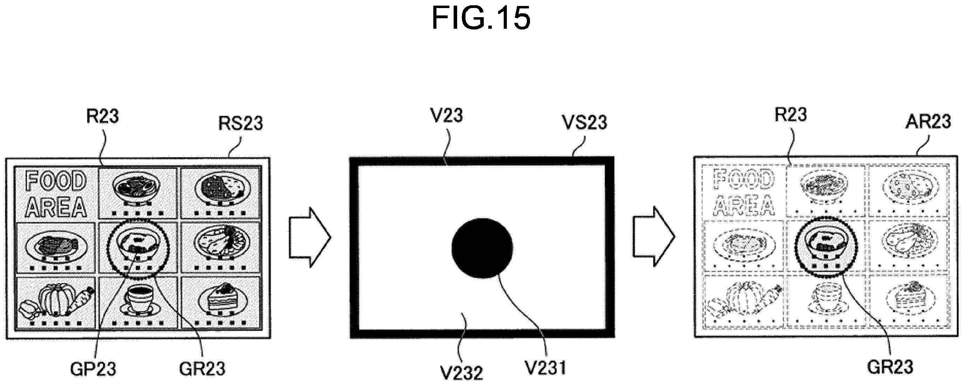

For example, the display control unit 124 may control a visual salience of a first virtual object in such a manner that a third region of the first virtual object that corresponds to the gaze region has a third visual salience, and a fourth region of the first virtual object that excludes the third region has a fourth visual salience different from the third visual salience. Note that the example will be specifically described later with reference to FIGS. 14 and 15.

### (Display Unit 13)

The display unit 13 has optical transmissivity, and is implemented by a lens unit that performs display using a hologram optical technology, a liquid crystal display (LCD) device, an organic light emitting diode (OLED) device, or the like, for example.

### (Speaker 14)

The speaker 14 reproduces a voice signal in accordance with control of the control unit 12.

### (Communication Unit 15)

The communication unit 15 is a communication module for performing transmission and reception of data with another device in a wired/wireless manner. The communication unit 15 wirelessly communicates with an external device directly or via a network access point, using a method such as, for example, a wired local area network (LAN), a wireless LAN, Wireless Fidelity (Wi-Fi, registered trademark, infrared communication, Bluetooth (registered trademark), or near field communication/contactless communication.

### (Manipulation Input Unit 16)

The manipulation input unit 16 is implemented by a manipulation member having a physical structure, such as a switch, a button, or a lever.

### (Storage Unit 17)

The storage unit 17 stores programs and parameters for the above-described control unit 12 executing functions. For example, the storage unit 17 may store information regarding an AR marker that is to be used for the recognition unit 122 recognizing an AR marker, and information regarding a content object to be displayed by the display control unit 124.

Heretofore, the configuration of the information processing apparatus 1 according to the present embodiment has been specifically described, but the configuration of the information processing apparatus 1 according to the present embodiment is not limited to the example illustrated in FIG. 3. For example, at least part of functions of the control unit 12 of the information processing apparatus 1 may exist in another device connected via the communication unit 15.

### <<3. Operation>>

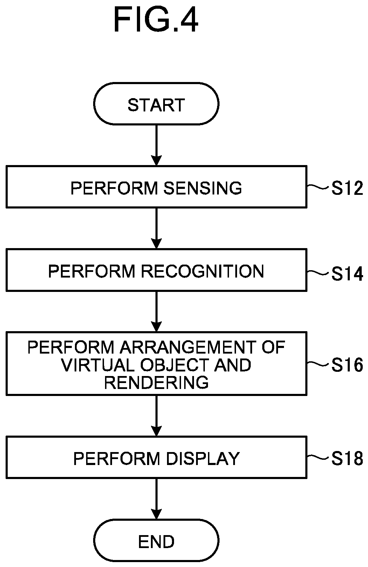

Heretofore, a configuration example of the information processing apparatus 1 according to the present embodiment has been described. Subsequently, an operation example of the information processing apparatus 1 according to the present embodiment will be described with reference to FIG. 4. FIG. 4 is a flowchart illustrating an operation example of the information processing apparatus 1 according to the present embodiment.

As illustrated in FIG. 4, first of all, sensing is performed by the sensor unit 11, and for example, the outward camera 110 acquires a captured image by capturing an image of the real space (S12). Subsequently, on the basis of a result of sensing performed in Step S12, the recognition unit 122 of the control unit 12 performs recognition of information regarding the user and information regarding the real space around the user (S14).

Subsequently, the display control unit 124 arranges a virtual object in a virtual space and performs rendering at a position in the virtual space that corresponds to a viewpoint position of the user (S16). Then, the display control unit 124 displays a virtual space image obtained by performing rendering in Step S16, on the display unit 13 (S18).

In Step S16, the display control unit 124 according to the present embodiment arranges, in the virtual space, a first virtual object having a visual salience corresponding to color information of the real space, and having substantially the same shape as a real object. In addition, a position at which the first virtual object is arranged corresponds to a position of the real object in the real space. As a result, if the virtual space image obtained by performing rendering at a position in the virtual space that corresponds to a viewpoint position of the user is displayed on the display unit 13 in Step S18, the first virtual object is viewed at substantially the same position as the real object.

### <<4. Example of Display Control>>

Heretofore, an operation example of the information processing apparatus 1 according to the present embodiment has been described. Subsequently, a specific example of the display control unit 124 according to the present embodiment will be described. Hereinafter, after an example in which the display control unit 124 displays a masking object and a content object is described with reference to FIGS. 5 to 12, an example in which the display control unit 124 displays a focus object will be described with reference to FIGS. 13 to 15.

### <4-1. Example of Displaying Masking Object and Content Object>

As described above, the display control unit 124 displays a masking object as a first virtual object and displays a content object as a second virtual object. Hereinafter, first of all, several specific examples of display control performed in a case where the display control unit 124 displays a masking object and a content object will be described.

### (Example in which masking object has luminance corresponding to luminance of real object)

First of all, an example in which the display control unit 124 displays a masking object having luminance (an example of visual salience) corresponding to luminance of a real object will be described with reference to FIG. 5. FIG. 5 is an explanatory diagram for describing an example in which a masking object has luminance corresponding to luminance of a real object.

In the example illustrated in FIG. 5, a real object R11 exists in a real space, and the real object R11 is recognized by the recognition unit 122 on the basis of a real space image RS11 obtained by the camera 110 capturing an image of the real space. In addition, in the example illustrated in FIG. 5, a content object V11 is displayed on the basis of content data VD11 that has been prestored or acquired from an external device.

For appropriately representing positional relationship between the real object R11 and the content object V11, the display control unit 124 arranges a masking object M11 in a virtual space together with the content object V11. Because the control related to the positions and shapes of the content object V11 and the masking object M11 is similar to the control related to the positions and shapes of the content object V1 and the masking object M1 that has been described with reference to FIG. 2, the description is omitted.

Here, the masking object M11 arranged in the virtual space in the example illustrated in FIG. 5 is different from the masking object M1 described with reference to FIG. 2 in that the masking object M11 has luminance (an example of visual salience) corresponding to luminance of a real object. In the example illustrated in FIG. 5, the masking object M11 has luminance lower (darker) than luminance of the real object R11 in the real space image RS11.

Nevertheless, in the example illustrated in FIG. 5, the masking object M11 has higher luminance than black color unlike the masking object M1 described with reference to FIG. 2. Thus, in a case where a virtual space image VS11 obtained by rendering the virtual space is displayed on the display unit 13, in a vision range AR11 of the user that is obtained through the display unit 13, the real object R11 is viewed by the user in a state in which luminance of the masking object M11 is added. As a result, it becomes easier for the user to see the real object R11, and because the content object V11 seems to be shielded by the real object R11, it becomes possible for the user to feel as if the content object V11 existed in the real space.

Note that, in the example illustrated in FIG. 5, luminance of the masking object M11 may be the same luminance throughout the entire masking object M11. In addition, in this case, luminance of the masking object M11 may be luminance lower than average luminance of the real object R11 in the real space image RS11.

In addition, in the example illustrated in FIG. 5, a parameter regarding color (for example, hue or saturation) that is other than luminance of the masking object M11 may be identified on the basis of a parameter regarding color that is other than luminance of the real object R11, or a predetermined parameter may be used.

In addition, in the example illustrated in FIG. 5, luminance of the masking object M11 is lower than luminance of the content object V11. With this configuration, each virtual object easily blends with the real space.

### (Example in which masking object has texture corresponding to texture of real object)

Subsequently, an example in which the display control unit 124 displays a masking object having texture corresponding to texture of a real object will be described with reference to FIG. 6. FIG. 6 is an explanatory diagram for describing an example in which a masking object has texture corresponding to texture of a real object.

In the example illustrated in FIG. 6, a real object R12 exists in a real space, and the real object R12 is recognized by the recognition unit 122 on the basis of a real space image RS12 obtained by the camera 110 capturing an image of the real space. In addition, in the example illustrated in FIG. 6, a content object V12 is displayed on the basis of content data VD12 that has been prestored or acquired from an external device.

For appropriately representing positional relationship between the real object R12 and the content object V12, the display control unit 124 arranges a masking object M12 in a virtual space together with the content object V12. Because the control related to the positions and shapes of the content object V12 and the masking object M12 is similar to the control related to the positions and shapes of the content object V1 and the masking object M1 that has been described with reference to FIG. 2, the description is omitted.

Here, the masking object M13 arranged in the virtual space in the example illustrated in FIG. 6 is different from the masking object M1 in FIG. 2 and the masking object M11 in FIG. 5 in that the masking object M13 has texture (an example of visual salience) corresponding to texture of a real object. In the example illustrated in FIG. 6, the masking object M12 has texture obtained by decreasing luminance of texture of the real object R12 in the real space image RS12.

Then, in a case where a virtual space image VS12 obtained by rendering the virtual space is displayed on the display unit 13, in a vision range AR12 of the user that is obtained through the display unit 13, the real object R12 is viewed by the user in a state in which texture of the masking object M12 is overlapped. As a result, texture of the real object R12 becomes clearer, and it becomes easier for the user to see the real object R12.

### (Example in which masking object has luminance corresponding to brightness of real space)

Subsequently, an example in which the display control unit 124 displays a masking object having luminance corresponding to information regarding brightness of the real space (an example of light source information) will be described with reference to FIG. 7. FIG. 7 is an explanatory diagram for describing an example in which a masking object has luminance corresponding to information regarding brightness of a real space.

In the example illustrated in FIG. 7, a real object R13 exists in a real space, and the real object R13 is recognized by the recognition unit 122 on the basis of a real space image RS13 obtained by the camera 110 capturing an image of the real space. In addition, light source information is acquired by the recognition unit 122 on the basis of the real space image RS13. For example, in the example illustrated in FIG. 7, light source information indicating that the real space is darker than the example illustrated in FIG. 5 may be acquired. In addition, in the example illustrated in FIG. 7, a content object V13 is displayed on the basis of content data VD13 that has been prestored or acquired from an external device.

For appropriately representing positional relationship between the real object R13 and the content object V13, the display control unit 124 arranges a masking object M13 in a virtual space together with the content object V13. Because the control related to the positions and shapes of the content object V13 and the masking object M13 is similar to the control related to the positions and shapes of the content object V1 and the masking object M1 that has been described with reference to FIG. 2, the description is omitted.

Here, the masking object M13 arranged in the virtual space in the example illustrated in FIG. 7 is different from the masking object M1 in FIG. 2, the masking object M11 in FIG. 5, and the masking object M12 in FIG. 6 in that the masking object M13 has luminance corresponding to light source information. As described above, in the example illustrated in FIG. 7, because the real space is darker than the example illustrated in FIG. 5, the masking object M13 has higher luminance than the masking object M11 illustrated in FIG. 5.

Then, in a case where a virtual space image VS13 obtained by rendering the virtual space is displayed on the display unit 13, in a vision range AR13 of the user that is obtained through the display unit 13, the real object R13 is viewed by the user in a state in which color of the masking object M13 is added. As a result, even in a case where the real space is dark, it becomes easier for the user to see the real object R13.

Note that the display control performed in a case where the real space is bright may be similar to the example described with reference to FIG. 5. More specifically, a masking object displayed in a case where the real space is bright has luminance lower than the masking object M13 illustrated in FIG. 7. Nevertheless, because the real space is bright, even in a case where a masking object having low luminance is displayed, it is easy to see a real object.

Note that, if a masking object having high luminance is displayed in a case where the real space is bright, a real object looks too bright and it might become relatively hard to see a content object. Thus, as described above, by displaying a masking object having higher luminance in a case where the real space is darker, for example, in accordance with the brightness of the real space, it is possible to ensure the visibility of both of a real object and a content object.

### (Example in which content object has color corresponding to color temperature of real space)

Subsequently, an example in which the display control unit 124 displays a content object having color corresponding to information regarding color temperature of the real space (an example of light source information) will be described with reference to FIG. 8. FIG. 8 is an explanatory diagram for describing an example in which a content object has a color corresponding to information regarding a color temperature of a real space.

In the example illustrated in FIG. 8, a real object R14 exists in a real space, and the real object R14 is recognized by the recognition unit 122 on the basis of a real space image RS14 obtained by the camera 110 capturing an image of the real space. In addition, information regarding color temperature is acquired by the recognition unit 122 as light source information on the basis of the real space image RS14. In addition, in the example illustrated in FIG. 8, a content object V14 is displayed on the basis of content data VD14 that has been prestored or acquired from an external device.

For appropriately representing positional relationship between the real object R14 and the content object V14, the display control unit 124 arranges a masking object M14 in a virtual space together with the content object V14. Because the control related to the positions and shapes of the content object V14 and the masking object M14 is similar to the control related to the positions and shapes of the content object V1 and the masking object M1 that has been described with reference to FIG. 2, the description is omitted.

Here, the content object V14 arranged in the virtual space in the example illustrated in FIG. 8 is different from the content object V14 in FIG. 2 and the like in that the content object V14 in FIG. 8 has color corresponding to information regarding color temperature (an example of light source information). In addition, in the example illustrated in FIG. 8, the masking object M14 arranged in the virtual space may have any of the above-described visual saliences, and furthermore, a visual salience of the masking object M14 may change in accordance with information regarding color temperature. For example, the display control unit 124 may reflect color temperature of the real space in the virtual space in such a manner that the content object V14 and the masking object M14 have color corresponding to information regarding color temperature of the real space.

Then, in a case where a virtual space image VS14 obtained by rendering the virtual space is displayed on the display unit 13, in a vision range AR14 of the user that is obtained through the display unit 13, the real object R14 is viewed by the user in a state in which color of the masking object M14 is added. As a result, even in a case where the real space is dark, it becomes easier for the user to see the real object R14. In addition, because the content object V14 has color corresponding to color temperature of the real space, the content object V14 blends with real space, and it becomes possible for the user to feel as if the content object V14 existed in the real space.

### (Example of displaying shadow of virtual object)

Subsequently, an example of in which the display control unit 124 displays a shadow of a masking object and a shadow of a content object in a real space will be described with reference to FIGS. 9 and 10. FIGS. 9 and 10 are explanatory diagrams describing an example of a case of displaying a shadow of a masking object and a shadow of a content object in a real space. First of all, as a comparative example, an example of displaying a shadow of a masking object and a shadow of a content object in a case where a masking object with black color is displayed similarly to FIG. 2 will be described with reference to FIG. 9.

In the example illustrated in FIG. 9, a real object R2 exists in a real space, and the real object R2 is recognized on the basis of a real space image RS2 obtained by the camera 110 capturing an image of the real space. In addition, in the example illustrated in FIG. 9, a content object V2 is displayed on the basis of content data VD2 that has been prestored or acquired from an external device.

For appropriately representing positional relationship between the real object R2 and the content object V2, a masking object M2 is arranged in a virtual space together with the content object V2. The control related to the positions and shapes of the content object V2 and the masking object M2 has been described with reference to FIG. 2. Because the control is similar to the control related to the positions and shapes of the content object V1 and the masking object M1, the description is omitted. In addition, in the example illustrated in FIG. 9, the masking object M2 has black color similarly to the masking object M1 illustrated in FIG. 2.

Here, in the example illustrated in FIG. 9, a virtual light source is set in the virtual space, and an illuminated region L2 illuminated by the virtual light source exists. In addition, by the virtual light source, a shadow SM2 of the masking object M2 and a shadow SV2 of the content object V2 are generated in the virtual space.

Then, in a case where a virtual space image VS2 obtained by rendering the virtual space is displayed on the display unit 13, in a vision range AR2 of the user that is obtained through the display unit 13, the illuminated region L2, the shadow SM2, and the shadow SV2 are viewed by the user in addition to the content object V2. Nevertheless, because the masking object M2 has black color, it is hard for the user to see the real object R2. As a result, it becomes difficult for the user to recognize that the shadow SM2 is a shadow corresponding to the real object R2. As a result, the user might feel a feeling of strangeness for the existence of the shadow SM2.

Thus, the display control unit 124 according to the present embodiment displays a masking object having a visual salience corresponding to color information of the real space, similarly to the above-described other specific examples, and also displays a shadow of the masking object. The example will be described with reference to FIG. 10.

In the example illustrated in FIG. 10, a real object R15 exists in a real space, and the real object R15 is recognized on the basis of a real space image RS15 obtained by the camera 110 capturing an image of the real space. In addition, in the example illustrated in FIG. 10, a content object V15 is displayed on the basis of content data VD15 that has been prestored or acquired from an external device.

For appropriately representing positional relationship between the real object R15 and the content object V15, a masking object M15 is arranged in a virtual space together with the content object V15. Because the control related to the positions and shapes of the content object V15 and the masking object M15 is similar to the control related to the positions and shapes of the content object V1 and the masking object M1 that has been described with reference to FIG. 2, the description is omitted.

Here, in the example illustrated in FIG. 10, the masking object M15 has luminance corresponding to luminance of the real object R15 similarly to the example illustrated in FIG. 5. In addition, in the example illustrated in FIG. 10, similarly to the example illustrated in FIG. 9, a virtual light source is set in the virtual space, and an illuminated region L15 illuminated by the virtual light source exists. In addition, by the virtual light source, a shadow SM15 of the masking object M15 and a shadow SV15 of the content object V15 are generated in the virtual space.

Then, in a case where a virtual space image VS15 obtained by rendering the virtual space is displayed on the display unit 13, in a vision range AR15 of the user that is obtained through the display unit 13, the illuminated region L15, the shadow SM15, and the shadow SV15 are viewed by the user in addition to the content object V15. Here, in the example illustrated in FIG. 10, because it becomes easier for the user to see the real object R15 similarly to the example illustrated in FIG. 5, the user feels as if the shadow SM15 was a shadow of the real object R15. Furthermore, because the shadow SV15 generated by the same virtual light source as the shadow SM15 is displayed as a shadow of the content object V15, it becomes possible for the user to feel more as if the content object V15 existed in the real space.

### (Example of controlling visual salience of masking object on basis of positional relationship)

Subsequently, an example in which the display control unit 124 controls a visual salience of a masking object on the basis of positional relationship between a real object and a content object will be described with reference to FIG. 11. FIG. 11 is an explanatory diagram for describing an example of controlling a visual salience of a masking object on the basis of positional relationship between a real object and a content object.

In the example illustrated in FIG. 11, a real object R16 exists in a real space, and the real object R16 is recognized on the basis of a real space image RS16 obtained by the camera 110 capturing an image of the real space. In addition, in the example illustrated in FIG. 11, a content object V16 is displayed on the basis of content data VD16 that has been prestored or acquired from an external device.

For appropriately representing positional relationship between the real object R16 and the content object V16, the display control unit 124 arranges a masking object M16 in a virtual space together with the content object V16. The control related to the positions and shapes of the content object V16 and the masking object M16 is similar to the control related to the positions and shapes of the content object V1 and the masking object M1 that has been described with reference to FIG. 2. In other words, the masking object M16 is arranged on the basis of the position of the real object R16. Thus, whether the masking object M16 shields the content object V16 can be determined on the basis of positional relationship between the real object R16 and the content object V16.

In a case where it is determined that the masking object M16 shields at least part of the content object V16, on the basis of positional relationship between a real object and a content object, the display control unit 124 controls a visual salience so as to vary for each region in the masking object M16.

In the example illustrated in FIG. 11, a first region M162 of the masking object M16 that shields the content object V16 has a first visual salience. In addition, a second region M164 of the masking object M16 that excludes the first region M162 has a second visual salience different from the first visual salience.

Then, in a case where a virtual space image VS16 obtained by rendering the virtual space is displayed on the display unit 13, in a vision range AR16 of the user that is obtained through the display unit 13, the real object R13 is viewed by the user in a state in which color of the masking object M16 is added. As a result, a region R162 of the real object R13 that exists anterior to the content object V16 and a remaining region R164 are different in visibility. With this configuration, it becomes possible to cause the user to feel as if the content object V16 existed in the real space.

Note that, in the example illustrated in FIG. 11, the first visual salience is luminance corresponding to luminance of the real object R16 similarly to the example illustrated in FIG. 5, and the second visual salience is black color. Nevertheless, the present technology is not limited to the example, and the display control unit 124 can select any of the above-described visual saliences or a combination of a plurality of visual saliences, as a first visual salience or a second visual salience.

### (Example of controlling visual salience of masking object on basis of whether entire masking object is displayable)

Subsequently, an example in which the display control unit 124 controls a visual salience of a masking object on the basis of on the basis of whether the entire masking object is displayable will be described with reference to FIG. 12. FIG. 12 is an explanatory diagram for describing an example of controlling a visual salience of a masking object on the basis of whether the entire masking object is displayable.

FIG. 12 illustrates a vision range AR17 of the user that is obtained in a case where a masking object having luminance corresponding to luminance of a real object R17 is displayed similarly to the example illustrated in FIG. 5. Nevertheless, in FIG. 12, as compared with the example illustrated in FIG. 5, the real object R17 is larger or the real object R17 is closer to the display unit 13. Thus, the entire masking object fails to be displayed in such a manner that the masking object has substantially the same shape as the real object R17 and is viewed at substantially the same position as the real object R17.

As a result, in the example illustrated in FIG. 12, a region R172 of the real object R17 that overlaps with a display region of the display unit 13, and a remaining region R174 are different in the visibility of the real object R17, and the user might feel a feeling of strangeness.

Thus, in a case where the entire masking object cannot be displayed in such a manner that the masking object has substantially the same shape as a real object and is viewed at substantially the same position as the real object, the display control unit 124 may display a masking object having black color (an example of visual salience). With this configuration, the visibility of the real object does not vary between a region overlapping with a display region of the display unit 13 and a remaining region, and a feeling of strangeness felt by the user is reduced.

### <4-2. Example of Displaying Focus Object>

Heretofore, an example in which the display control unit 124 displays a masking object as a first virtual object and displays a content object as a second virtual object has been described. Subsequently, an example in which the display control unit 124 displays a focus object as a first virtual object will be described with reference to FIGS. 13 to 15.

### (Example in which focus object has texture corresponding to texture of real object)

First of all, an example in which the display control unit 124 displays a focus object having texture (an example of visual salience) corresponding to texture of a real object will be described with reference to FIG. 13. FIG. 13 is an explanatory diagram for describing an example in which a focus object has texture corresponding to texture of a real object.

In FIG. 13, a floor map R21 being a real object exists in the real space. In addition, on the basis of a real space image RS21 obtained by the camera 110 capturing an image of the real space, store regions R211 to R216 in the floor map R21 are recognized by the recognition unit 122 as mutually-different AR markers (real objects).

In the example illustrated in FIG. 13, among the store regions R211 to R216, the store region R216 is a focus target desired to attract attention of the user. Thus, the display control unit 124 displays a focus object V21 having substantially the same shape as the store region R216 being a focus target, so as to be viewed at substantially the same position as the store region R216. For example, the display control unit 124 may arrange the focus object V21 in a virtual space, and may display, on the display unit 13, a virtual space image VS21 obtained by performing rendering at a position in the virtual space that corresponds to a viewpoint position of the user.

In addition, in the example illustrated in FIG. 13, the focus object V21 has texture (an example of visual salience) corresponding to texture of the focus target (store region R216) that is acquired from the real space image RS21. Note that the texture corresponding to texture of the focus target may be the texture itself of the focus target that is acquired from the real space image RS21, or may be texture with adjusted color. In addition, in a case where the focus object V21 has a two-dimensional shape, the focus object V21 may have texture obtained by deforming the texture of the focus target, in accordance with a difference between the outward camera 110 and a viewpoint position of the user.

In a case where the virtual space image VS21 obtained by rendering such a virtual space is displayed on the display unit 13, in a vision range AR21 of the user that is obtained through the display unit 13, the store region R216 being a focus target is viewed by the user in a state in which color of the focus object V21 is added. As a result, it becomes easier to see the store region R216 being a focus target as compared with the surrounding store regions R211 to R215, and the store region R216 can attract the attention of the user.

### (Example of controlling visual salience of focus object on basis of visual line information)

Subsequently, an example in which the display control unit 124 controls a visual salience of a focus object on the basis of visual line information will be described with reference to FIGS. 14 and 15. FIGS. 14 and 15 are explanatory diagrams for describing an example of controlling a visual salience of a masking object on the basis of visual line information.

In the example illustrated in FIG. 14, a real object R22 being a focus target exists in a real space. In addition, the real object R22 is recognized by the recognition unit 122 on the basis of a real space image RS22 obtained by the camera 110 capturing an image of the real space. In addition, in the example illustrated in FIG. 14, information regarding a gaze point GP22 is acquired by the recognition unit 122 as visual line information. Then, the display control unit 124 identifies a neighborhood region around the gaze point GP22 as a gaze region GR22 being gazed at by the user.

In addition, the display control unit 124 arranges a focus object V22 in a virtual space. Nevertheless, in the example illustrated in FIG. 14, the display control unit 124 controls a visual salience of the focus object V22 on the basis of the gaze region GR22. Specifically, the display control unit 124 performs control in such a manner that a visual salience varies between a region V221 (third region) of the focus object V22 that corresponds to the gaze region GR22, and a remaining region V222 (fourth region). In the example illustrated in FIG. 14, the region V221 has texture corresponding to texture of the gaze region GR22 of the real object R22 (an example of third visual salience). In addition, in the example illustrated in FIG. 14, the region V222 has black color (an example of fourth visual salience).

In a case where a virtual space image VS22 obtained by rendering such a virtual space is displayed on the display unit 13, in a vision range AR22 of the user that is obtained through the display unit 13, because the gaze region GR22 of the real object R22 that is gazed at by the user is viewed in a state in which the texture of the region V222 is overlapped, the visibility is high as compared with the other regions. With this configuration, it is possible to enhance the visibility of a gaze region gazed at by the user.

Note that, in the above description, the focus object V22 is displayed in such a manner that the region V221 and the region V222 are different in visual salience in the focus object V22 corresponding to the real object R22, but the present technology is not limited to the example. For example, the display control unit 124 can obtain similar effects by performing, on the basis of a gaze region identified in the real space, display control in such a manner that texture corresponding to texture of the gaze region is viewed with being overlapped with the gaze region. The display control can be performed irrespective of the existence of the real object R22, for example.

In addition, in the above description, an example of enhancing the visibility of a gaze region has been described, but the present technology is not limited to the example. For example, the display control unit 124 can also relatively enhance the visibility of a gaze region and obtain similar effects by lowering the visibility of a region other than the gaze region identified in the real space. The example will be described with reference to FIG. 15.

In the example illustrated in FIG. 15, a real object R23 being a focus target exists in a real space. In addition, the real object R23 is recognized by the recognition unit 122 on the basis of a real space image RS23 obtained by the camera 110 capturing an image of the real space. In addition, in the example illustrated in FIG. 15, information regarding a gaze point GP23 is acquired by the recognition unit 122 as visual line information. Then, the display control unit 124 identifies a neighborhood region around the gaze point GP23 as a gaze region GR23 being gazed at by the user.

In addition, the display control unit 124 arranges a focus object V23 in a virtual space. Nevertheless, in the example illustrated in FIG. 15, the display control unit 124 controls a visual salience of the focus object V23 on the basis of the gaze region GR23. Specifically, the display control unit 124 performs control in such a manner that a visual salience varies between a region V231 (third region) of the focus object V23 that corresponds to the gaze region GR23, and a remaining region V232 (fourth region). In the example illustrated in FIG. 15, the region V231 has black color (an example of third visual salience). In addition, in the example illustrated in FIG. 15, the region V232 has white color with high luminance (an example of fourth visual salience).

In a case where a virtual space image VS23 obtained by rendering such a virtual space is displayed on the display unit 13, in a vision range AR23 of the user that is obtained through the display unit 13, luminance is not added to the gaze region GR23 of the real object R23 that is gazed as by the user. Nevertheless, in a region of the real object R23 that is other than the gaze region GR22, white color with high luminance is added and visibility lowers. As a result, the visibility of the gaze region GR22 is relatively enhanced. Note that, similarly to the above-described example, the display control unit 124 can also obtain similar effects by performing, on the basis of a gaze region identified in the real space, display control in such a manner that the visibility of a region in the real space that is other than the gaze region lowers. The display control can be performed irrespective of the existence of the real object R23, for example.

### <<5. Hardware Configuration Example>>

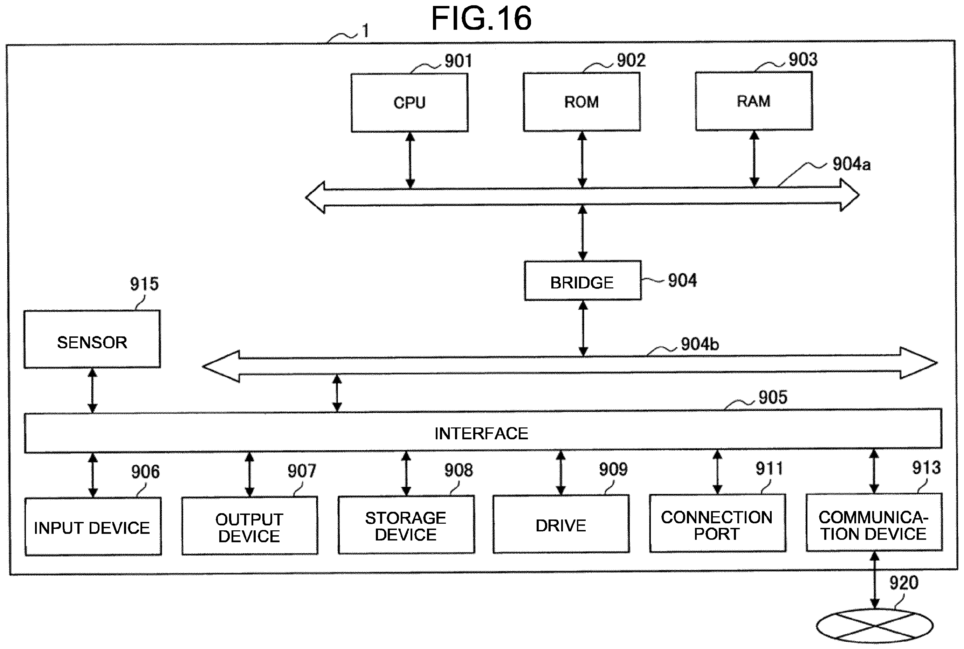

Heretofore, the embodiment of the present disclosure has been described. Finally, a hardware configuration of an information processing apparatus according to an embodiment of the present disclosure will be described with reference to FIG. 16. FIG. 16 is a block diagram illustrating an example of a hardware configuration of the information processing apparatus 1 according to an embodiment of the present disclosure. Information processing performed by the information processing apparatus 1 according to an embodiment of the present disclosure is implemented by cooperation between software and hardware to be described below.

As illustrated in FIG. 16, the information processing apparatus 1 includes a central processing unit (CPU) 901, a read only memory (ROM) 902, a random access memory (RAM) 903, and a host bus 904a. In addition, the information processing apparatus 1 includes a bridge 904, an external bus 904b, an interface 905, an input device 906, an output device 907, a storage device 908, a drive 909, a connection port 911, a communication device 913, and a sensor 915. The information processing apparatus 1 may include a processing circuit such as a digital signal processor (DSP) or an application specific integrated circuit (ASIC) instead of the CPU 901 or along therewith.

The CPU 901 functions as an arithmetic processing unit and a control device, and controls the overall operations in the information processing apparatus 1 in accordance with various programs. In addition, the CPU 901 may be a microprocessor. The ROM 902 stores programs, operation parameters, and the like used by the CPU 901. The RAM 903 temporarily stores programs used in execution of the CPU 901, parameters appropriately changed in the execution, and the like. The CPU 901 can form the control unit 12, for example.

The CPU 901, the ROM 902, and the RAM 903 are mutually connected by the host bus 904a including a CPU bus and the like. The host bus 904a is connected with the external bus 904b such as a peripheral component interconnect/interface (PCI) bus via the bridge 904. Note that the host bus 904a, the bridge 904, and the external bus 904b are not necessarily separately configured and such functions may be mounted in a single bus.

The input device 906 is implemented by a device through which a user inputs information, such as a mouse, a keyboard, a touch panel, a button, a microphone, a switch, and a lever, for example. In addition, the input device 906 may be a remote control device that uses infrared rays or other radio waves, or an external connection device such as a mobile phone or a personal digital assistance (PDA) that supports a manipulation of the information processing apparatus 1, for example. Furthermore, the input device 906 may include an input control circuit or the like that generates an input signal on the basis of information input by the user using the above-described input means, and outputs the input signal to the CPU 901, for example. The user of the information processing apparatus 1 can input various types of data or instruct a processing operation to the information processing apparatus 1 by manipulating the input device 906.

The output device 907 is formed by a device that can visually or aurally notify the user of acquired information. As such devices, there are a display device such as a CRT display device, a liquid crystal display device, a plasma display device, an EL display device, or a lamp, a voice output device such as a speaker and a headphone, a printer device, and the like. The output device 907 outputs results obtained through various types of processing performed by the information processing apparatus 1, for example. Specifically, the display device visually displays results obtained through various types of processing performed by the information processing apparatus 1 in various forms such as text, images, tables, and graphs. On the other hand, the voice output device converts audio signals including reproduced voice data, acoustic data, and the like into analog signals and aurally outputs the analog signals. The output device 907 can form the display unit 13, for example.

The storage device 908 is a device for data storage that is formed as an example of a storage unit of the information processing apparatus 1. For example, the storage device 908 is implemented by a magnetic storage device such as an HDD, a semiconductor storage device, an optical storage device, a magneto-optical storage device, or the like. The storage device 908 may include a storage medium, a recording device for recording data on the storage medium, a reading device for reading data from the storage medium, a deletion device for deleting data recorded on the storage medium, and the like. The storage device 908 stores programs and various types of data executed by the CPU 901, various types of data acquired from the outside, and the like. The storage device 908 can form the storage unit 17, for example.

The drive 909 is a reader/writer for storage media and is incorporated in or externally attached to the information processing apparatus 1. The drive 909 reads information recorded on an attached removable storage medium such as a magnetic disc, an optical disc, a magneto-optical disc, or a semiconductor memory, and outputs the information to the RAM 903. In addition, the drive 909 can write information into the removable storage medium.

The connection port 911 is an interface connected with an external device and is a connector to the external device through which data can be transferred by a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark), or wireless USB (WUSB), for example. In addition, the communication device 913 may be a router for optical communication, a router for asymmetric digital subscriber line (ADSL), various communication modems, or the like. For example, the communication device 913 can transmit/receive signals and the like to/from the Internet and other communication devices in accordance with a predetermined protocol such as, for example, TCP/IP. The communication device 913 can form the communication unit 15, for example.

The sensor 915 corresponds to various types of sensors such as an acceleration sensor, a gyro sensor, a geomagnetic sensor, a light sensor, a sound sensor, a distance measuring sensor, and a force sensor, for example. The sensor 915 acquires information regarding a state of the information processing apparatus 1 itself, such as an attitude and a movement speed of the information processing apparatus 1, and information regarding a surrounding environment of the information processing apparatus 1, such as brightness and noise of the periphery of the information processing apparatus 1. In addition, the sensor 915 may include a GPS sensor that receives a GPS signal, and measures latitude, longitude, and altitude of the device. The sensor 915 can form, for example, the sensor unit 11.

Note that, the network 920 is a wired or wireless transmission path of information transmitted from devices connected to the network 920. For example, the network 920 may include a public circuit network such as the Internet, a telephone circuit network, or a satellite communication network, various local area networks (LANs) including Ethernet (registered trademark), a wide area network (WAN), and the like. In addition, the network 920 may include a dedicated circuit network such as an internet protocol-virtual private network (IP-VPN).

Heretofore, an example of a hardware configuration capable of implementing the functions of the information processing apparatus 1 according to an embodiment of the present disclosure has been described. The above-described components may be implemented using universal members, or may be implemented by hardware specific to the function of the respective components. Thus, in accordance with a technical level at the time when an embodiment of the present disclosure is executed, it is possible to appropriately change hardware configurations to be used.

Note that a computer program for implementing each of the functions of the information processing apparatus 1 according to an embodiment of the present disclosure as described above can be created, and can be mounted on a PC or the like. In addition, a computer-readable recording medium on which such a computer program is stored can also be provided. The recording medium is a magnetic disc, an optical disc, a magneto-optical disc, a flash memory, or the like, for example. In addition, the above-described computer program may be distributed through, for example, a network without using a recording medium.

### <<6. Conclusion>>

As described above, according to an embodiment of the present disclosure, it is possible to enhance the visibility of a real object.

Heretofore, the preferred embodiment(s) of the present disclosure has/have been described in detail with reference to the accompanying drawings, but the technical scope of the present disclosure is not limited to the above examples. A person skilled in the art can find various alterations and modifications within the scope of the appended claims, and it should be understood that they will naturally come under the technical scope of the present disclosure.

For example, the display control unit 124 may display animation in a stepwise manner in accordance with a temporal sequence. For example, the display control unit 124 may display animation in such a manner that a virtual object comes off and a real word gradually appears. With this configuration, it becomes possible to represent a virtual object so as to blend with a real space more naturally.

In addition, in the above-described embodiment, the description has been given of an example in which texture of a focus object is texture corresponding to texture acquired from a captured image (texture itself or texture with adjusted color), but the present technology is not limited to the example. For example, as texture of a first virtual object, texture associated with an AR marker may be used. In this case, texture associated with an AR marker may be stored in the storage unit 17, or may be acquired from another device via the communication unit 15. With this configuration, it also becomes possible to display a focus object with higher definition texture.

In addition, the above description has been given of an example in which the display control unit 124 controls display performed by the display unit 13 having optical transmissivity, but the present technology is not limited to the example. For example, also in a case where the display unit 13 is a projector, the display control unit 124 can also obtain effects similar to the above-described effects by controlling the display unit 13 being a projector, and projecting each virtual object onto a real space.

In addition, steps in the above-described embodiment need not be always processed chronologically in accordance with the order described as a flowchart. For example, steps in the processing in the above-described embodiment may be processed in an order different from the order described as a flowchart, or may be concurrently processed.

In addition, the effects described in this specification are merely illustrative or exemplified effects, and are not limitative. In other words, with or in place of the above effects, the technology according to the present disclosure can achieve other effects that are obvious to those skilled in the art from the description of this specification.

Note that the following configurations come under the technical scope of the present disclosure.
(1) An information processing apparatus comprising:
   a display control unit configured to display a first virtual object having a visual salience corresponding to color information of a real space, and having substantially a same shape as a real object existing in the real space, in the real space so as to be viewed at substantially a same position as the real object.
(2) The information processing apparatus according to (1), wherein the color information of the real space includes color information regarding the real object.
(3) The information processing apparatus according to (1) or (2), wherein the color information of the real space is acquired from a captured image of the real space.
(4) The information processing apparatus according to (3), wherein the color information of the real space includes at least any one of luminance information, hue information, saturation information, texture information, or light source information that is acquired from the captured image.
(5) The information processing apparatus according to (4), wherein the visual salience of the first virtual object includes luminance corresponding to luminance of the real object.
(6) The information processing apparatus according to (4) or (5), wherein the visual salience of the first virtual object includes texture corresponding to texture of the real object.
(7) The information processing apparatus according to any one of (4) to (6), wherein the visual salience of the first virtual object includes luminance corresponding to the light source information.
(8) The information processing apparatus according to any one of (1) to (7), wherein the display control unit further displays, in the real space, a second virtual object different from the first virtual object.
(9) The information processing apparatus according to (8), wherein the display control unit displays the first virtual object and the second virtual object in such a manner that luminance of the first virtual object becomes lower than luminance of the second virtual object.
(10) The information processing apparatus according to (8) or (9), wherein the display control unit displays the first virtual object and the second virtual object on a basis of positional relationship between the real object and the second virtual object.
(11) The information processing apparatus according to (10), wherein the display control unit controls the visual salience of the first virtual object on the basis of the positional relationship.
(12) The information processing apparatus according to (11), wherein, in a case where the display control unit displays, on the basis of the positional relationship, the first virtual object and the second virtual object in such a manner that the first virtual object shields at least part of the second virtual object, the display control unit controls the visual salience in such a manner that a first region of the first virtual object that shields the second virtual object has a first visual salience, and a second region of the first virtual object that excludes the first region has a second visual salience different from the first visual salience.
(13) The information processing apparatus according to any one of (1) to (12), wherein the display control unit controls the visual salience of the first virtual object on a basis of whether the entire first virtual object can be displayed in such a manner that the first virtual object has substantially a same shape as the real object, and is viewed at substantially a same position as the real object.
(14) The information processing apparatus according to any one of (1) to (13), wherein the display control unit controls the visual salience of the first virtual object on a basis of visual line information regarding a visual line of a user in the real space.
(15) The information processing apparatus according to (14), wherein, on a basis of a gaze region of the user in the real space that is identified on a basis of the visual line information, the display control unit controls the visual salience in such a manner that a third region of the first virtual object that corresponds to the gaze region has a third visual salience, and a fourth region of the first virtual object that excludes the third region has a fourth visual salience different from the third visual salience.
(16) The information processing apparatus according to (15), wherein the third visual salience includes texture corresponding to texture of the real object.
(17) The information processing apparatus according to any one of (1) to (16), wherein the display control unit controls display performed by a display unit having optical transmissivity.
(18) The information processing apparatus according to (17), wherein the display control unit controls the display unit in such a manner that the first virtual object is superimposed on the real object when viewed from a user.
(19) An information processing method comprising:
   by a processor, displaying a first virtual object having a visual salience corresponding to color information of a real space, and having substantially a same shape as a real object existing in the real space, in the real space so as to be viewed at substantially a same position as the real object.
(20) A program for causing a computer to implement a function of:
   displaying a first virtual object having a visual salience corresponding to color information of a real space, and having substantially a same shape as a real object existing in the real space, in the real space so as to be viewed at substantially a same position as the real object.

### Reference Signs List

- 1: INFORMATION PROCESSING APPARATUS
- 11: SENSOR UNIT
- 12: CONTROL UNIT
- 13: DISPLAY UNIT
- 14: SPEAKER
- 15: COMMUNICATION UNIT
- 16: MANIPULATION INPUT UNIT
- 17: STORAGE UNIT
- 110: OUTWARD CAMERA
- 111: INWARD CAMERA
- 112: MICROPHONE
- 113: GYRO SENSOR
- 114: ACCELERATION SENSOR
- 115: ORIENTATION SENSOR
- 116: POSITION MEASURING UNIT
- 117: BIOLOGICAL SENSOR
- 122: RECOGNITION UNIT
- 124: DISPLAY CONTROL UNIT

## Claims

1. An information processing apparatus comprising:
a display control unit configured to display a first virtual object having a visual salience corresponding to color information of a real space, and having substantially a same shape as a real object existing in the real space, in the real space so as to be viewed at substantially a same position as the real object.

2. The information processing apparatus according to claim 1, wherein the color information of the real space includes color information regarding the real object.

3. The information processing apparatus according to claim 1, wherein the color information of the real space is acquired from a captured image of the real space.

4. The information processing apparatus according to claim 3, wherein the color information of the real space includes at least any one of luminance information, hue information, saturation information, texture information, or light source information that is acquired from the captured image.

5. The information processing apparatus according to claim 4, wherein the visual salience of the first virtual object includes luminance corresponding to luminance of the real object.

6. The information processing apparatus according to claim 4, wherein the visual salience of the first virtual object includes texture corresponding to texture of the real object.

7. The information processing apparatus according to claim 4, wherein the visual salience of the first virtual object includes luminance corresponding to the light source information.

8. The information processing apparatus according to claim 1, wherein the display control unit further displays, in the real space, a second virtual object different from the first virtual object.

9. The information processing apparatus according to claim 8, wherein the display control unit displays the first virtual object and the second virtual object in such a manner that luminance of the first virtual object becomes lower than luminance of the second virtual object.

10. The information processing apparatus according to claim 8, wherein the display control unit displays the first virtual object and the second virtual object on a basis of positional relationship between the real object and the second virtual object.

11. The information processing apparatus according to claim 10, wherein the display control unit controls the visual salience of the first virtual object on the basis of the positional relationship.

12. The information processing apparatus according to claim 11, wherein, in a case where the display control unit displays, on the basis of the positional relationship, the first virtual object and the second virtual object in such a manner that the first virtual object shields at least part of the second virtual object, the display control unit controls the visual salience in such a manner that a first region of the first virtual object that shields the second virtual object has a first visual salience, and a second region of the first virtual object that excludes the first region has a second visual salience different from the first visual salience.

13. The information processing apparatus according to claim 1, wherein the display control unit controls the visual salience of the first virtual object on a basis of whether the entire first virtual object can be displayed in such a manner that the first virtual object has substantially a same shape as the real object, and is viewed at substantially a same position as the real object.

14. The information processing apparatus according to claim 1, wherein the display control unit controls the visual salience of the first virtual object on a basis of visual line information regarding a visual line of a user in the real space.

15. The information processing apparatus according to claim 14, wherein, on a basis of a gaze region of the user in the real space that is identified on a basis of the visual line information, the display control unit controls the visual salience in such a manner that a third region of the first virtual object that corresponds to the gaze region has a third visual salience, and a fourth region of the first virtual object that excludes the third region has a fourth visual salience different from the third visual salience.

16. The information processing apparatus according to claim 15, wherein the third visual salience includes texture corresponding to texture of the real object.

17. The information processing apparatus according to claim 1, wherein the display control unit controls display performed by a display unit having optical transmissivity.

18. The information processing apparatus according to claim 17, wherein the display control unit controls the display unit in such a manner that the first virtual object is superimposed on the real object when viewed from a user.

19. An information processing method comprising:
by a processor, displaying a first virtual object having a visual salience corresponding to color information of a real space, and having substantially a same shape as a real object existing in the real space, in the real space so as to be viewed at substantially a same position as the real object.

20. A program for causing a computer to implement a function of:
displaying a first virtual object having a visual salience corresponding to color information of a real space, and having substantially a same shape as a real object existing in the real space, in the real space so as to be viewed at substantially a same position as the real object.
